# EUROPÄISCHE PATENTSCHRIFT

(11) **EP 3 323 402 B1**
(45) Veröffentlichungstag und Bekanntmachung des Hinweises auf die Patenterteilung: **01.04.2020**
(21) Anmeldenummer: 17201527.3
(22) Anmeldetag: 14.11.2017
(51) Int. Cl.: F24D 13/02, F24D 19/10, A61H 33/06, F24D 3/14

(54) **WANDFLÄCHENHEIZUNG**
HEATING WALL SURFACES
DISPOSITIF DE CHAUFFAGE DE SURFACES DE PAROIS

(30) Priorität: 16.11.2016 DE 102016122034; 16.11.2016 DE 202016106425 U
(43) Veröffentlichungstag der Anmeldung: 23.05.2018
(73) Patentinhaber: RUKU-Sauna Manufaktur GmbH & Co.KG, 89257 Illertissen (DE)
(72) Erfinder: BALLES, Gotthard, 89257 Illertissen (DE)
(74) Vertreter: Patentanwälte und Rechtsanwalt Weiß, Arat & Partner mbB

(56) Entgegenhaltungen:
- WO-A2-2011/088870
- DE-A1- 3 043 449
- US-A- 2 613 900
- US-A- 3 302 912
- US-A- 5 802 249
- US-A1- 2013 292 369

## Beschreibung

### Technisches Gebiet

Die Erfindung betrifft eine Wandflächenheizung nach Anspruch 1.

### Stand der Technik

Wandflächenheizungen werden meist in Saunen, insbesondere in sogenannten Infrarotsaunen, zum Aufheizen der Saunakabine genutzt. Bei solchen Wandflächenheizungen bzw. Wandflächenheizelementen kommen meist elektrische Heizelemente zum Einsatz, wie zum Beispiel elektrische Rohrheizelemente.

In diesem Zusammenhang wird auf die US 5 802 249 A1 hingewiesen, welche eine Wandflächenheizung offenbart, bei der ein Heizstab durch eine Öffnung eines Halteelementes geführt wird.

Eine derartige Wandflächenheizung mit Rohrheizelementen wird beispielsweise in der DE 199 53 345 B4 offenbart. Bei solchen Wandflächenheizungen kommt es meist zu störenden Geräuschen, welche unter anderem durch das unterschiedlich schnelle Aufheizen bzw. Abkühlen der einzelnen dort verbauten Elemente entstehen.

In diesem Zusammenhang wird weiterhin auf die Offenbarung aus der DE 10 2013 109 665 A1 hingewiesen, welche sich dadurch auszeichnet, dass die dort angeführten Heizelemente durch quaderförmige Metallblöcke geführt und gehalten werden. Diese Konstruktion ist jedoch relativ aufwendig und kostenintensiv an Material und Arbeit, da eine hohe Anzahl an Teile zunächst ge- und dann verbaut werden muss. Weiterhin konnten zwar durch die Offenbarung aus der DE 10 2013 109 665 A1 Geräusche, die durch die Wandflächenheizung und/oder Elemente der Wandflächenheizung erzeugt werden, im Vergleich zum damaligen Stand der Technik verringert, jedoch nicht vollständig eliminiert werden. Insbesondre von den quaderförmigen Metallböcken gehen bei der Erhitzung bzw. der Abkühlung störende Geräusche aus.

### Aufgabe der Erfindung

Die Aufgabe der vorliegenden Erfindung ist es, die Nachteile aus dem Stand der Technik zu überwinden. Insbesondere soll eine Wandheizung für Saunaanlagen bereitgestellt werden, bei der Störgeräusche, die bisher durch die Erwärmung und Abkühlung einzelner Bauteile der bekannten Wandheizung entstanden, vollständig beseitigt werden.

Auch ist es Aufgabe der Erfindung, die aus dem Stand der Technik bekannten Konstruktionen derart zu verbessern, dass im Vergleich zum Stand der Technik eine höhere und schneller erreichbare Maximaltemperatur in einer Saunakabine erreicht wird, ohne dass Störgeräusche auftreten. Dabei soll zudem die Konstruktion vereinfacht werden, so dass weniger Teile verbaut werden müssen.

### Lösung der Aufgabe

Zur Lösung der Aufgabe führen die Merkmale nach dem Anspruch 1. Vorteilhafte Ausgestaltungen sind in den Unteransprüchen beschrieben.

In typischen Ausführungsbeispielen weist eine erfindungsgemäße Wandflächenheizung für eine Sauna einen Innenraum auf, der von einer Saunawand-Aussenseite und einer Saunawand-Innenseite begrenzt wird. Mit der Saunawand-Aussenseite ist, in Richtung des Innenraums, ein Rückblech verbunden. Weiterhin ist gegenüberliegend des Rückblechs und ebenfalls in Richtung des Innenraums ein Abdeckblech mit der Saunawand-Innenseite verbunden.

Durch den Begriff Saunawand-Innenseite wird das Wandsegment beschrieben, welches bei einem ordnungsgemäßen Einbau der Wandflächenheizung einer Saunakabine zugewandt ist. Die Saunakabine ist dabei ein Raum, der von einzelnen Wandelementen umgeben ist, über eine Türe betreten werden kann und durch die Wandflächenheizung aufgeheizt wird. Die Saunawand-Aussenseite ist das Wandsegment, welches sich bei einem ordnungsgemäßen Einbau der Wandflächenheizung auf der der Saunakabine abgewandten Seite befindet.

Weiterhin weist die Wandflächenheizung einen Bodenverbindungsbereich und einen Deckenverbindungsbereich auf. Der Bodenverbindungsbereich entspricht dabei dem Bereich der Wand bzw. der Wandflächenheizung, welcher der Grundfläche der ordnungsgemäss installierten Saunakabine zugewandt ist. Der Bodenverbindungsbereich der Wand befindet sich in einer ordnungsgemäss eingebauten Sauna somit auf der dem Saunaboden zugewandten Seite der Wand. Der Deckenverbindungsbereich befindet sich in der ordnungsgemäss zusammengesetzten Wand andernends des Bodenverbindungsbereichs. Somit befindet sich der Deckenverbindungsbereich im Bereich des oberen Abschlusses der ordnungsgemäss installierten Saunakabine. Der Deckenverbindungsbereich befindet sich in einer ordnungsgemäss eingebauten Sauna somit auf der der Saunadecke zugewandten Seite der Wand.

Weiterhin sind die Saunawand-Aussenseite und die Saunawand-Innenseite an ihren jeweiligen Aussenseiten mit hölzernen Nut- und Federbrettern verschalt. Mit Aussenseite ist jeweils die Seite gemeint, welche nicht in Richtung des Innenraums und des Heizstabes gerichtet ist. Auch hier sind Variationen in Bezug auf das Material und/oder die Anordnung der entsprechenden Verschalung möglich. Auch können diesbezüglich Unterschiede in der Verkleidung zwischen der Kabineninnenwand und der Kabinenaußenwand vorgesehen sein.

An der Innenseite der Saunawand-Aussenseite, also die Seite die in Richtung des Innenraumes gerichtet ist, ist ein Rückblech angeordnet. Dieses Rückblech erfüllt mehrere Funktionen und ist in einem typischen Ausführungsbeispiel aus Metall ausgebildet. Vorzugsweise handelt es sich dabei um Aluminium oder eine Aluminiumlegierung.

Zum einen reflektiert das Rückblech einen Teil der durch den Heizstab erzeugte Wäre in Richtung der Saunakabine. Zum anderen bildet das Rückblech die Grundlage zum Festlegen der elektronischen Sicherheits- und Kontrollelemente sowie des Heizstabes, welcher mittels eines Reflektorhalteelements auf dem Rückblech angeordnet ist.

Bei dem Heizstab handelt es sich vorzugsweise um einen elektrischen Rohrheizkörper. Weiterhin ist es auch möglich, Heizkabel oder andere vorzugsweise zylinderförmige Wärmequellen in den Innenraum als Heizelement einzubringen. Ebenso sollen auch weitere Wärmequellen wie etwa Rohre oder Heizelemente, die mit einem heißen Medium geheizt werden, vorliegend umfasst sein. Dadurch, dass sich der U-förmige Heizstab mit seiner geschlossenen Seite in der Wandflächenheizung bis zum Bodenbereich erstreckt, kann eine verbesserte und dadurch gleichmäßigere Temperaturverteilung in der Saunakabine erreicht werden. Vor allem kann durch die U-Form im unteren Bereich der Kabine eine höhere Temperatur erreicht werden, wodurch ein insgesamt verbessertes Klima in der Saunakabine gegeben ist. Ein weiterer Vorteil ist, dass durch die Nähe des Heizelements zum Bodenverbindungsbereich die Zirkulation erhöht werden kann. Natürlich können, entsprechend der Größe der Saunakabine auch mehrere U-förmige Heizstäbe nebeneinander in der Wandheizung angeordnet sein.

Die Wandflächenheizung weist in einem typischen Ausführungsbeispiel auf dem Rückblech im Bereich des Deckenverbindungsbereichs Steuerungselemente, Temperaturwächter, ein Erdungselement und ein Fühlerblech auf. Die Anzahl und die Ausrichtung dieser Elemente richten sich nach dem jeweiligen Ausführungsbeispiel, insbesondere nach der Anzahl der nebeneinander angeordneten Heizstäbe. Durch diese Elemente kann ein Überhitzen der Wandflächenheizung verhindert aber auch die Temperatur in der Saunakabine sicher geregelt werden. Die Steuerung kann dabei sowohl durch ein Ab- bzw. Einschalten des Heizstabes, als auch durch ein Erhöhen oder Senken der Heizleistung erfolgen. Bei einer ggf. entstehenden Überhitzung wird/werden dadurch der oder die Heizstab/Heizstäbe abgeschaltet.

Um Störgeräusche wie zum Beispiel Knackgeräusche zu verhindern, die durch temperaturbedingter Bewegung einzelner Bauteile zueinander entstehen, ist die erfindungsgemäße Konstruktion derart ausgestaltet, dass auf solche Störgeräusche verursachenden Bauteile vollständig verzichtet werden kann. Solche eingesparten Bauteile sind beispielsweise die bisher im Stand der Technik verwendeten quaderförmigen Metallblöcke, die zur Halterung des Heizstabes dienten.

Um diese quaderförmigen Metallblöcke einzusparen bzw. bei der Konstruktion zu vermeiden, werden besonders ausgeformte Reflektorhalteelemente eingesetzt. Diese erlauben es, in Vergleich zu Stand der Technik, dass eine höhere und schneller erreichbare Maximaltemperatur in einer Saunakabine erreicht werden kann, ohne dass Störgeräusche auftreten, was bisher nicht möglich war.

Das Reflektorhalteelement ordnet den U-förmigen Heizstab an dem Rückblech an. Das Reflektorhalteelement ist weiterhin für die Aufnahme und anschließende großflächigere Verteilung der von dem Heizstab abgestrahlten Wärmeenergie vorgesehen. Das Reflektorhalteelement ist in einem typischen Ausführungsbeispiel als ein streifenförmiges Blechbauteil aus Metall ausgebildet. Vorzugsweise handelt es sich dabei um einen Blechstreifen aus Aluminium oder einer Aluminiumlegierung.

Ein weiteres Merkmal dieses Reflektorhalteelements ist, dass es zumindest zwei umgekehrt hutförmige Ausformungen aufweist. Diese Ausformungen sind einstückige durch mehrfach rechtwinklige Umformungen entstandene Teilbereiche des Reflektorhalteelements. Die Ausformungen sind in regelmäßigen Abständen über die Länge des Reflektorhalteelements verteilt. Vorzugseise weisen übliche Reflektorhalteelemente fünf gleichmäßig beabstandete Ausformungen auf. Die Anzahl richtet sich jedoch nach der Länge des U-förmigen Heizstabs und kann daher variieren. Durch die Verwendung der Reflektorhalteelemente wird eine größere Anzahl an Bauteilen und Befestigungselementen eingespart, die bisher benötigt wurden Dies führt neben den oben genannten Vorteilen bezüglich der Vermeidung von Störgeräuschen zudem zur Einsparung von Material und Arbeits- bzw. Fertigungszeit.

Jede Ausformung bildet einen Befestigungsboden und zwei Führungswandungen aus, wobei der Befestigungsboden parallel - und die beiden Führungswandungen orthogonal zum Rückblech ausgerichtet sind. Diese Ausformung ersetzen die bisher notwendig gewesenen quaderförmigen Metallblöcke, welche die Aufgabe gehabt hatten, die Heizstäbe zu halten. Vorzugsweise mittels Nieten, möglicherweise jedoch auch durch andere Verbindungselemente, wie Schrauben oder dergleichen, aber auch durch entsprechenden Klebstoff, ist der Befestigungsboden der Ausformung des Reflektorhalteelement mit dem Rückblech verbunden. Dies ermöglicht auf vorteilhafteste Weise den Verzicht auf die bisher notwendigen gewesenen quaderförmigen Metallblöcke, die wesentlichen Anteil an den bisher weiterhin bestandenen Störgeräuschen hatten.

Die zwei Führungswandungen jeder Ausformung verfügen in bevorzugten Ausführungsbeispielen je über eine kreisrunde Durchlassöffnung. Diese Durchlassöffnungen sind in ihrem Durchmesser derart ausgeformt, dass der Heizstab dort durchgreifen kann, jedoch nicht eingeklemmt oder dergleichen wird. Diese Ausformung ist natürlich an die jeweilige Ausführung des Heizstabs angepasst.

Um den U-förmigen Heizstab zu halten, sind zwei parallel zueinander angeordnete Reflektorhalteelemente vorgesehen, die entsprechend des Abstandes der beiden Schenkel des U-förmigen Heizstabes, zueinander auf dem Rückblech beabstandet bzw. festgelegt sind. Die Reflektorhalteelemente nehmen über die Durchlassöffnungen der Führungswandungen den U-förmigen Heizstab auf.

Um den U-förmigen Heizstab an seiner geschlossenen Seite, welche in Richtung des Saunabodens bzw. des Bodenverbindungsbereichs gerichtet ist, zu halten, bildet das Rückblech einen Haken aus. Dieser Haken ist aus dem Rückblech einstückig ausgeformt und nimmt den U-förmigen Heizstab an seinem zwischen den beiden Schenkeln liegenden Boden auf. Durch die einstückige Ausformung des Hakens aus dem Rückblech heraus, werden weitere Teile eingespart und so die Quellen für Störgeräusche weiter vermindert.

Ja nach der vorgesehener Größe der zu heizenden Sauna, ist die Ausführung der erfindungsgemäßen Wandflächenheizung in unterschiedlichen Größen vorgesehen. Neben einem Ausführungsbeispiel, welches einen U-förmigen Heizstab aufweist, der vom Bodenverbindungsbereich bis zum Deckenverbindungsbereich reicht, sind auch Ausführungsformen vorgesehen, die beispielsweise zwei oder mehr solcher U-förmiger Heizstäbe nebeneinander umfassen und ebenfalls mittels der Reflektorhalteelemente auf dem Rückblech angeordnet sind. Auch vorgesehen ist, dass die Länge der U-förmigen Heizstäbe variieren kann, so dass auch kleinere Wandflächenheizungen für spezielle Anwendungsbereiche zur Verfügung stehen.

Es sind bevorzugt drei Ausführungsbeispiele vorgesehen:
Eine Wandheizung mit einem U-förmigen Heizstab mit einer maximalen Heizleistung von 600 Watt.

Eine zweite Wandheizung mit zwei U-förmigen, jedoch im Vergleich zur ersten Wandheizung kürzeren Heizstäben, mit einer gemeinsamen maximalen Heizleistung von 800 Watt. Und eine dritte Wandheizung mit ebenfalls zwei U-förmigen, jedoch langen Heizstäben, mit einer gemeinsamen maximalen Heizleistung von 1200 Watt.

Neben diesen bevorzugen Ausführungsvarianten, sind selbstverständlich auch andere Ausführungsformen mit anderen Heizleistungen möglich.

Weiterhin ist in einem typischen Ausführungsbeispiel eine hitzereflektierende isolierende Schicht in der Saunawand-Aussenseite vorhanden. Diese isolierende Schicht ist geeignet die vom Heizstab in Richtung Saunawand-Aussenseite abgegebene Wärmeenergie in Richtung der Saunawand-Innenseite zu reflektieren. Dies hat den Vorteil, dass die Wärme in Richtung der Saunakabine geleitet wird und nicht nutzlos nach aussen verloren geht.

### Figurenbeschreibung

Weitere Vorteile, Merkmale und Einzelheiten der Erfindung ergeben sich aus der nachfolgenden Beschreibung bevorzugter Ausführungsbeispiele sowie anhand der Zeichnungen; diese zeigen in:
- Figur 1: eine Draufsicht auf eine Innenseite einer Saunawand-Aussenseite einer erfindungsgemäßen Wandflächenheizung mit einem U-förmigen Heizstab;
- Figur 2: eine Schnittansicht der Wandflächenheizung nach Figur 1 mit einer Saunawand-Innenseite entlang der Linie II - II;
- Figur 3: eine Draufsicht auf eine Innenseite einer Saunawand-Aussenseite eines weiteren Ausführungsbeispiels einer Wandflächenheizung mit zwei U-förmigen Heizstäben;
- Figur 4: eine Schnittansicht der Wandflächenheizung nach Figur 3 mit einer Saunawand-Innenseite entlang der Linie IV - IV;
- Figur 5: eine schematische Ansicht einer elektrischen Verschaltung für die Wandflächenheizung nach Figur 3.

### Ausführungsbeispiel

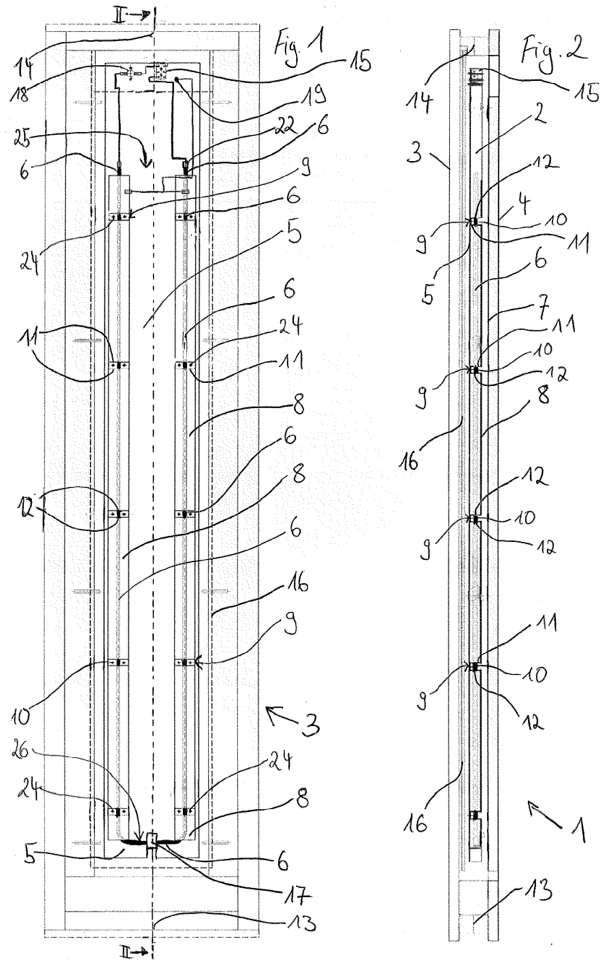

In Figur 1 und 2 ist ein Ausführungsbeispiel einer Wandflächenheizung 1 dargestellt. Die Wandflächenheizung 1 verfügt über eine Saunawand-Aussenseite 3 und eine Sauanawand-Innenseite 4. Zwischen der Saunawand-Aussenseite 3 und der Sauanawand-Innenseite 4 befindet sich ein Innenraum 2. In dem Innenraum 2 ist ein U-förmiger Heizstab 6 angeordnet. Dieser U-förmige Heizstab 6 ist mittels zweier zueinander parallel angeordneter Reflektorhalteelemente 8 auf einem Rückblech 5 angeordnet, wobei das Rückblech 5 mit einer zum Innenraum 2 gerichteten Fläche der Sauanawand-Aussenseite 3 verbunden ist.

Die Reflektorhalteelemente 8 weisen im vorliegenden Ausführungsbeispiel fünf gleich beabstandete Ausformungen 9 auf, welche, wie in Figur 2 gezeigt, ein umgedrehtes Hutprofil aufweisen.

Die Ausformungen 9 weisen weiterhin jeweils einen Befestigungsboden 10 und zwei Führungswandungen 11 auf. Der Befestigungsboden 10 ist parallel zum Rückblech 5 ausgerichtet und mit diesem verbunden. Mittels der Befestigungsböden 10 der Ausformungen 9 sind die Reflektorhalteelemente 8 mit dem Rückblech 5 verschraubt, vernietet, oder durch eine anderen entsprechende kraft- und/oder formschlüssige Verbindung verbunden. Im vorliegenden Ausführungsbeispiel ist jeder Befestigungsboden 10 über zwei Nieten 24 mit dem Rückblech 5 verbunden.

Die jeweils zwei sich gegenüberliegenden Führungswandungen 11 der Ausformung 9, welche orthogonal zum Befestigungsboden 10 und dem Rückblech 5 ausgerichtet sind, verfügen über jeweils eine Durchlassöffnung 12. Diese Durchlassöffnungen 12 stellen kreisrunde Bohrungen dar, deren Durchmesser größer als ein Durchmesser des Heizstabes 6 ist. Dies ermöglicht, dass der Heizstab 6 durch die Durchlassöffnungen 12 der Führungswandungen 11 geführt und schließlich dort gehalten werden kann.

Der U-förmige Heizstab 6 ist derart im Innenraum 2 auf dem Rückblech 5 angeordnet, dass eine offene Seite 25 des U-förmigen Heizstabs 6 in Richtung eines Deckenverbindungsbereichs 14 und der Boden 26 des U-förmigen Heizstabs 6 in Richtung eines Bodenverbindungsbereichs 13 der Wandflächenheizung 1 reicht.

Der der offenen Seite 25 des U-förmigen Heizstabs 6 gegenüberliegende Boden 26 wird durch einen Haken 17 gehalten. Dieser Haken 17 ist aus dem Rückblech 5 bevorzugt einstückig ausgeformt und bewirkt, dass der U-förmige Heizstab 6 in den Durchlassöffnungen 12 der Ausformungen 9 des Reflektorhalteelements 8 festgelegt bzw. gehalten wird.

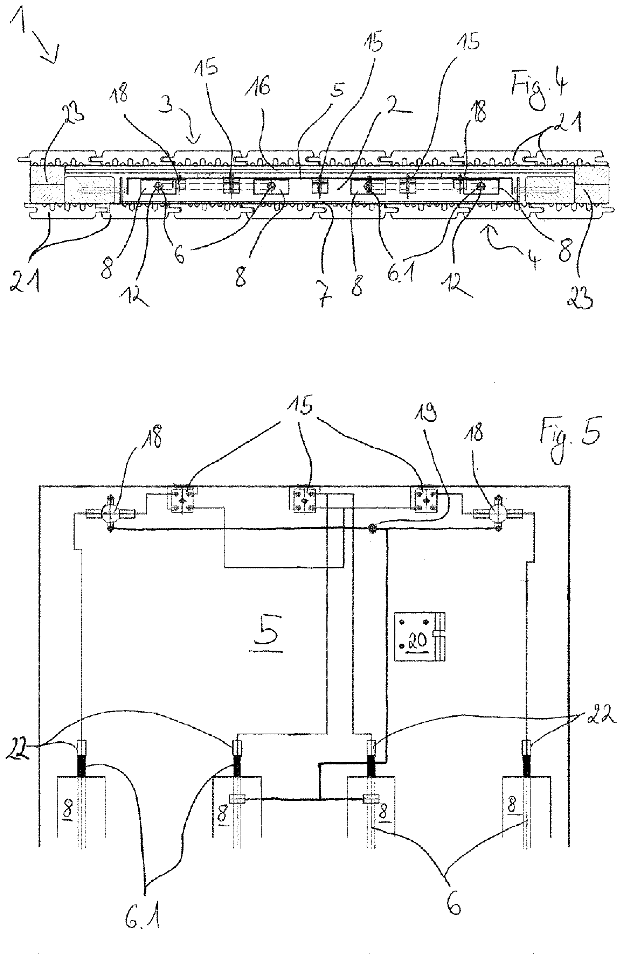

Die freien Enden des Heizstabes 6, welche in Richtung des Deckenverbindungsbereichs 14 gerichtet sind, sind über entsprechende Anschlüsse 22, siehe Figur 5, und Kabel mit einem Steuerelement 15 und einem Temperaturwächter 18 verbunden. Das Steuerelement 15 und der Temperaturwächter 18 sowie ein Erdungselement 19 sind zwischen dem Deckenverbindungsbereich 14 und den freien Enden des U-förmigen Heizstabs 6 im Innenraum 2 auf dem Rückblech 5 angeordnet.

Die Saunawand-Aussenseite 3 verfügt auf ihrer dem Innenraum 2 zugewandten Seite über eine isolierende Schicht 16, welche verhindert, dass Wärme in Richtung der Saunawand-Aussenseite 3 abgegeben wird. Der Saunawand-Aussenseite 3 liegt die Saunawand-Innenseite 4 gegenüber. Diese verfügt an ihrer Innenseite, also der dem Innenraum 2 zugewandten Seite über ein Abdeckblech 7, welches die hölzernen Bestandteile der Saunawand-Innenseite 4 der Wandflächenheizung 1, d.h. Nut- und Federbretter 21, vom Innenraum 2 und dem Heizstab 6 trennt.

Der Deckenverbindungsbereich 14 und der Bodenverbindungsbereich 13 sind derart ausgeformt, dass sie auf einfache Weise den Einbau der Wandflächenheizung 1 in eine Saunaanlage ermöglichen.

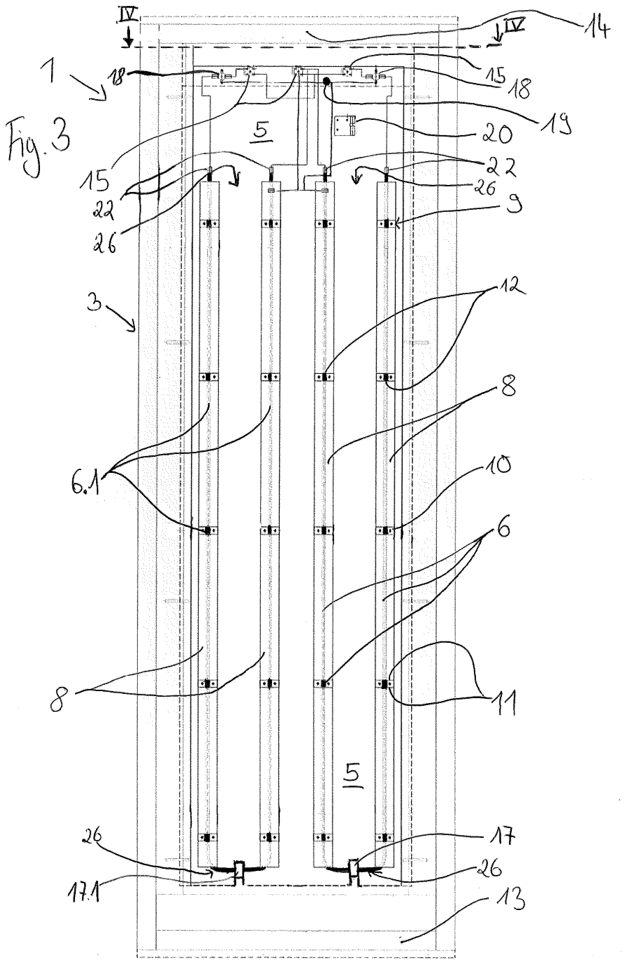

In Figur 3 ist ein weiteres Ausführungsbeispiel der Wandflächenheizung 1 dargestellt. Dieses Ausführungsbeispiel unterscheidet sich von dem Ausführungsbeispiel, welches in Figur 1 und 2 dargestellt ist dadurch, dass neben dem U-förmigen Heizstab 6 ein zweiter U-förmiger Heizstab 6.1 umfasst ist. Dieser zweite U-förmige Heizstab 6.1 ist ebenfalls mit einem Steuerelement 15 und einem Temperaturwächter 18 verbunden und verfügt auch über zwei entsprechende Reflektorhalteelemente 8. Weiterhin verfügt die Wandflächenheizung 1 im vorliegenden Ausführungsbeispiel über ein Fühlerblech 20, welches ebenfalls auf dem Rückblech 5 angeordnet ist. Zudem ist aus dem Rückblech 5 neben dem Haken 17 ein weiterer Haken 17.1 für den zweiten U-förmigen Heizstab 6.1 einstückig ausgeformt.

In Figur 4 ist die Wandflächenheizung 1 nach Figur 3 in einer Schnittansicht dargestellt, die den Blick auf den Innenraum 2 in Richtung des Deckenverbindungsbereichs 14 freigibt. Hier ist zu erkennen, dass die Saunawand-Aussenseite 3 sowie die Saunawand-Innenseite 4 in diesem Ausführungsbeispiel mit hölzernen Nut- und Federbrettern 21 verkleidet sind. Weiterhin ist hier ebenfalls die die Saunawand-Aussenseite 3 abschirmende isolierende Schicht 16 ersichtlich. Gegenüberliegend ist weiterhin die Abdeckplatte 7 zu erkennen, die den Innenraum 2 von der Saunawand-Innenseite 4 trennt.

Ferner sind vier Führungswandungen 11 mit ihren Durchlassöffnungen 12 der Ausformungen 9 bzw. vier Reflektorhalteelemente 8 zu erkennen. Durch die Durchlassöffnungen 12 verlaufen die Schenkel der beiden U-förmigen Heizstäbe 6 und 6.1. Zudem sind mehrere Steuerungselemente 15 sowie Temperaturwächter 18 ersichtlich.

Der Innenraum 2 wird durch die Beabstandung von der Saunawand-Aussenseite 3 und der Saunawand-Innenseite 4 geschaffen. Diese Beabstandung wird durch hölzerne Beabstandungsbalken 23 erreicht und gesichert.

In Figur 5 ist eine schematische Ansicht der elektrischen Verschaltung bzw. Verkabelung der Wandflächenheizung 1 nach dem Ausführungsbeispiel aus Figur 3 mit den zwei U-förmigen Heizstäben 6 und 6.1 dargestellt.

Obwohl nur einige bevorzugte Ausführungsbeispiele der Erfindung beschrieben und dargestellt wurden, ist es offensichtlich, dass der Fachmann zahlreiche Modifikationen hinzufügen kann, ohne Wesen und Umfang der Erfindung zu verlassen.

Die Wandflächenheizung 1 weist sich durch ein Steuerungselement 15 und einen Temperaturwächter 18 aus.

Dabei ist in der Saunawand-Aussenseite 3 eine isolierende Schicht 16 vorhanden, geeignet die Wärmeenergie des Heizstabs 6, 6.1 in Richtung der Saunawand-Innenseite 4 zu reflektieren.

Ergänzend sind auf dem Rückblech 5 ein Erdungselement 19 und ein Fühlerblech 20 angeordnet.

Abschliessend sind die Saunawand-Aussenseite 3 und die Saunawand-Innenseite 4 an ihren jeweiligen Aussenseiten mit hölzernen Nut- und Federbrettern 21 verschalt sind. Aussenseite bedeutet in diesem Zusammenhang die jeweils zur Sitzkabine hin und die zur Sauna-Aussenhaut gerichtete Seite.

**Bezugszeichenliste**

| | | | |
|---|---|---|---|
| 1 | Wandflächenheizung | 34 | |
| 2 | Innenraum | 35 | |
| 3 | Saunawand-Aussenseite | 36 | |
| 4 | Saunawand-Innenseite | 37 | |
| 5 | Rückblech | 38 | |
| 6 | Heizstab | 39 | |
| 7 | Abdeckblech | 40 | |
| 8 | Reflektorhalteelement | 41 | |
| 9 | Ausformung | 42 | |
| 10 | Befestigungsboden | 43 | |
| 11 | Führungswandung | 44 | |
| 12 | Durchlassöffnung | 45 | |
| 13 | Bodenverbindungsbereich | 46 | |
| 14 | Deckenverbindungsbereich | 47 | |
| 15 | Steuerungselement | 48 | |
| 16 | isolierende Schicht | 49 | |
| 17 | Haken | 50 | |
| 18 | Temperaturwächter | 51 | |
| 19 | Erdungselement | 52 | |
| 20 | Fühlerblech | 53 | |
| 21 | Nut- und Federbrett | 54 | |
| 22 | Anschluss | 55 | |
| 23 | Beabstandungsbalken | 56 | |
| 24 | Niete | 57 | |
| 25 | Offene Seite | 58 | |
| 26 | Boden | 59 | |
| 27 | | 60 | |
| 28 | | 61 | |
| 29 | | 62 | |
| 30 | | 63 | |
| 31 | | 64 | |
| 32 | | 65 | |
| 33 | | 66 | |

## Patentansprüche

1. Wandflächenheizung für eine Sauna mit einem Innenraum (2), einer Saunawand-Aussenseite (3) und einer Saunawand-Innenseite (4), wobei in dem Innenraum (2) ein Rückblech (5), ein Heizstab (6, 6.1) und ein Abdeckblech (7) angeordnet sind,
**dadurch gekennzeichnet,**
**dass** der Heizstab (6) von einem Reflektorhalteelement (8) geführt wird, wobei
das Reflektorhalteelement (8) zumindest zwei einstückige Ausformungen (9) aufweist, wobei jede Ausformung (9) aus einem Befestigungsboden (10) und zwei Führungswandungen (11) besteht, wobei die Befestigungsböden (10) mit dem Rückblech (5) verbunden sind und wobei die Führungswandungen (11) je eine Durchlassöffnung (12) für den Heizstab (6, 6.1) aufweisen, wobei das Reflektorhalteelement (8), das zumindest zwei Ausformungen (9) aufweist, welche ein umgedrehtes Hutprofil aufweisen, wobei der Befestigungsboden (10) parallel zu dem Rückblech (5) ausgerichtet ist und mit diesem verbunden ist.

2. Wandflächenheizung (1) nach Anspruch 1, **dadurch gekennzeichnet, dass** der Heizstab (6) die Durchlassöffnungen (12) der Führungswandungen (11) der Ausformung (9) des Reflektorhalteelements (8) durchgreift.

3. Wandflächenheizung (1) nach Anspruch 1, **dadurch gekennzeichnet, dass** der Heizstab (6,6.1) U-förmig ausgeformt ist.

4. Wandflächenheizung (1) nach Anspruch 1, **dadurch gekennzeichnet, dass** das Rückblech (5) einen Haken (17, 17.1) ausbildet.

5. Wandflächenheizung (1) nach Anspruch 4, **dadurch gekennzeichnet, dass** der Haken (17 17.1) einstückig aus dem Material des Rückblechs (5) ausgeformt ist.

6. Wandflächenheizung (1) nach Anspruch 1, **dadurch gekennzeichnet, dass** das Rückblech (5) an der Innenseite der Saunawand-Aussenseite (3) angeordnet ist.

7. Wandflächenheizung (1) nach Anspruch 1, **dadurch gekennzeichnet, dass** das Abdeckblech (7) an der Innenseite der Saunawand- Innenseite (4) angeordnet ist.

8. Wandflächenheizung (1) nach Anspruch 6 und 7, **dadurch gekennzeichnet, dass** der Innenraum (2) einerseits durch das Rückblech (5) und andererseits durch das Abdeckblech (7) begrenzt ist.

9. Wandflächenheizung (1) nach den vorherigen Ansprüchen, **dadurch gekennzeichnet, dass** mehrere U-förmige Heizstäbe (6, 6.1) nebeneinander auf dem Rückblech (5) angeordnet sind.

10. Wandflächenheizung (1) nach den vorherigen Ansprüchen, **gekennzeichnet durch** einen Bodenverbindungsbereich (13) und einen Deckenverbindungsbereich (14).

## Claims

1. Wall surface heating for a sauna with an interior space (2), a sauna wall outer side (3) and a sauna wall inner side (4), wherein a back plate (5), a heating rod (6, 6.1) and a cover plate (7) are arranged in the interior space (2),
**characterized in that**
the heating rod (6) is guided by a reflector holding element (8), the reflector holding element (8) having at least two one-piece shaped portions (9), each shaped portion (9) comprising a fixing base (10) and two guide walls (11), the fixing bases (10) being connected to the back plate (5), and the guide walls (11) each having a passage opening (12) for the heating rod (6, 6.1), wherein the reflector holding element (8), which has at least the two shaped portions (9) which have an inverted hat profile, wherein the fixing base (10) is aligned parallel to the back plate (5) and is connected thereto.

2. Wall panel heating (1) according to claim 1, **characterized in that** the heating rod (6) passes through the passage openings (12) of the guide walls (11) of the shaped portion (9) of the reflector holding element (8).

3. Wall surface heating (1) according to claim 1, **characterised in that** the heating rod (6, 6.1) is U-shaped.

4. Wall surface heating (1) according to claim 1, **characterized in that** the back plate (5) forms a hook (17, 17.1).

5. Wall surface heating (1) according to claim 4, **characterized in that** the hook (17, 17.1) is formed in one piece from the material of the back plate (5).

6. Wall surface heating (1) according to claim 1, **characterized in that** the back plate (5) is arranged on the inside of the sauna wall outside (3).

7. Wall panel heating (1) according to claim 1, **characterized in that** the cover plate (7) is arranged on the inside of the sauna wall inner side (4).

8. Wall panel heating (1) according to claims 6 and 7, **characterised in that** the interior space (2) is limited on the one hand by the back plate (5) and on the other hand by the cover plate (7).

9. Wall surface heating (1) according to the previous claims, **characterized in that** several U-shaped heating rods (6, 6.1) are arranged next to each other on the back plate (5).

10. Wall panel heating (1) according to the previous claims, **characterized by** a floor connection area (13) and a ceiling connection area (14).

## Revendications

1. Dispositif de chauffage de surface de paroi pour un sauna avec un espace intérieur (2), une face extérieure de paroi de sauna (3) et une face intérieure de paroi de sauna (4), dans lequel dans l'espace intérieur (2) sont disposées une plaque arrière (5), une tige chauffante (6, 6.1) et une plaque de recouvrement (7),
**caractérisé par le fait**
**que** la tige chauffante (6) est guidée par un élément de maintien de réflecteur (8), l'élément de maintien de réflecteur (8) présentant au moins deux modelages d'une seule pièce (9), chaque modelage (9) consistant en un fond de fixation (10) et deux parois de guidage (11), les fonds de fixation (10) étant connectés à la plaque arrière (5) et les parois de guidage (11) présentant, chacune, une ouverture de passage (12) pour la tige chauffante (6, 6.1), l'élément de maintien de réflecteur (8) présentant au moins deux modelages (9) qui présentent un profil de chapeau inversé, le fond de fixation (10) étant orienté parallèlement à la plaque arrière (5) et étant connecté à cette dernière.

2. Dispositif de chauffage de surface de paroi (1) selon la revendication 1, **caractérisé par le fait que** la tige chauffante (6) passe à travers les ouvertures de passage (12) des parois de guidage (11) du modelage (9) de l'élément de maintien de réflecteur (8).

3. Dispositif de chauffage de surface de paroi (1) selon la revendication 1, **caractérisé par le fait que** la tige chauffante (6, 6.1) est réalisée en forme de "U".

4. Dispositif de chauffage de surface de paroi (1) selon la revendication 1, **caractérisé par le fait que** la plaque arrière (5) forme un crochet (17, 17.1).

5. Dispositif de chauffage de surface de paroi (1) selon la revendication 4, **caractérisé par le fait que** le crochet (17 17.1) est réalisé d'une seule pièce à partir du matériau de la plaque arrière (5).

6. Dispositif de chauffage de surface de paroi (1) selon la revendication 1, **caractérisé par le fait que** la plaque arrière (5) est disposée sur la face intérieure de la face extérieure de paroi de sauna (3).

7. Dispositif de chauffage de surface de paroi (1) selon la revendication 1, **caractérisé par le fait que** la plaque de recouvrement (7) est disposée sur la face intérieure de la face intérieure de paroi de sauna (4).

8. Dispositif de chauffage de surface de paroi (1) selon les revendications 6 et 7, **caractérisé par le fait que** l'espace intérieur (2) est délimité, d'une part, par la plaque arrière (5) et, d'autre part, par la plaque de recouvrement (7).

9. Dispositif de chauffage de surface de paroi (1) selon les revendications précédentes, **caractérisé par le fait que** plusieurs tiges chauffantes en "U" (6, 6.1) sont disposées côte à côte sur la plaque arrière (5).

10. Dispositif de chauffage de surface de paroi (1) selon les revendications précédentes, **caractérisé par** une zone de connexion au fond (13) et une zone de connexion au plafond (14).
